(19) Europäisches Patentamt
European Patent Office
Office européen des brevets

(11) **EP 3 533 660 B1**

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(51) Int Cl.:
**B60L 53/14** *(2019.01)*   **B60L 53/66** *(2019.01)*
**B60L 58/12** *(2019.01)*

(21) Anmeldenummer: **19155580.4**

(22) Anmeldetag: **05.02.2019**

(54) **VERFAHREN ZUR LASTSTEUERUNG EINER LADESTATION FÜR EIN ELEKTROFAHRZEUG**

METHOD FOR LOAD CONTROL OF A CHARGING STATION FOR AN ELECTRIC VEHICLE

PROCÉDÉ DE COMMANDE DE CHARGE D'UNE STATION DE CHARGE POUR UN VÉHICULE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2018 DE 102018104577**

(43) Veröffentlichungstag der Anmeldung:
**04.09.2019 Patentblatt 2019/36**

(73) Patentinhaber: **Bender GmbH & Co. KG**
**35305 Grünberg (DE)**

(72) Erfinder: **FREITAG, Steffen**
**35321 Laubach (DE)**

(74) Vertreter: **advotec.**
**Patent- und Rechtsanwälte**
**Georg-Schlosser-Straße 6**
**35390 Gießen (DE)**

(56) Entgegenhaltungen:
**WO-A1-2013/023695    WO-A2-2012/095129**
**DE-T5-112012 005 488    DE-T5-112014 001 783**

**Beschreibung**

Die Erfindung betrifft ein Verfahren zur Laststeuerung einer Ladestation für ein Elektrofahrzeug mit einem Energiespeicher, wobei eine Ladeleistung konduktiv über eine Ladeanschlussleitung zugeführt und gesteuert wird.

Im Zuge der Energiewende speisen regenerative Energieträger zunehmend mehr Strom in das Stromversorgungsnetz ein. Beispielsweise stammt in Deutschland aktuell fast jede dritte verbrauchte Kilowattstunde aus Wind-, Solar-, Wasser- und Bioenergiekraftwerken. Dies hat zur Folge, dass ein Teil des in Deutschland produzierten Stroms exportiert werden muss, weil landesintern nicht genug Regelpotential (Regelleistung) zur Verfügung steht, um das Stromversorgungsnetz hinsichtlich der Netzfrequenz stabil zu halten.

Der Aufbau eins intelligenten Stromnetzes (smart grid) wird daher stark vorangetrieben. Im Sinne dieses "smart grid(s)" ist vorgesehen, künftig die in Elektrofahrzeugen verbauten Akkus als Energiespeicher für das Stromversorgungsnetz mit zu betrachten.

Dies erfordert ein bidirektionales Ladeverfahren, bei dem ein Teil der Speicherkapazität des Fahrzeug-Energiespeichers zum Laden oder Entladen von elektrischer Energie genutzt wird. Liegt ein Energieüberschuss im Stromnetz vor, wird der Fahrzeug-Energiespeicher geladen. Liegt umgekehrt ein Energiemangel vor, wird der Energiespeicher entladen und die gespeicherte Energie in das Stromnetz eingespeist. Die an das Stromversorgungsnetz angeschlossenen Elektrofahrzeuge können somit bei Rückspeisung positive Regelleistung (Einspeisung von Energie in das Stromversorgungsnetz), als auch bei Ladung negative Regelleistung (Energieentnahme aus dem Stromversorgungsnetz) bereitstellen.

Einerseits wird es allerdings nicht im Interesse des Fahrzeughalters liegen, dass das Fahrzeug als sein Eigentum von Dritten als Energiespeicher genutzt wird. Hinzu kommt, dass ein nicht vollgeladener Energiespeicher zu einer reduzierten Reichweite und damit zu Einschränkungen der Mobilität führt.

Andererseits wird auch im Hinblick auf die Anforderungen an die Qualität des Stromnetzes der Netzbetreiber nicht zulassen, dass jedes beliebige Fahrzeug ortsunabhängig Energie in das Netz einspeisen wird.

Als Alternative zur Bereitstellung von Regelleistung mittels eines bidirektionalen Ladeverfahrens wird in der Patent-Offenlegungsschrift DE 10 2009 043 380 A1 ein unidirektionales Ladeverfahren beschrieben, welches ebenfalls positive und negative Regelleistung zu Verfügung stellen kann. Eine Energierückspeisung von dem Elektrofahrzeug in das Stromnetz ist demzufolge nicht notwendig, da eine zeitliche Verschiebung des Ladevorgangs genutzt wird, um Regelleistung im weiteren Sinne bereitzustellen. Die zeitliche Differenz der Ladezeit zu einer längeren Parkdauer wird genutzt, um die Ladeleistung zu variieren. Durch eine Leistungsdrosselung kann somit positive Regelleistung (dem Stromversorgungsnetz wird weniger Energie entnommen) und durch eine Leistungserhöhung negative Regelleistung (dem Stromversorgungsnetz wird mehr Energie entnommen) bereitgestellt werden.

Allerdings weist dieses unidirektionale Verfahren den Nachteil auf, dass, falls an dem in ein Navigationsgerät eingegebenen Zielort keine Lademöglichkeit besteht, die Energiemenge für ein weiteres Ziel oder für den Rückweg nicht mitberücksichtigt wird. Des Weiteren kann eine sich öfter wiederholende Zieleingabe dem Fahrer nicht zugemutet werden; er wird in den wenigsten Fällen seinen Tag vollständig planen können.

Weiterhin werden Daten von der fahrzeuginternen Kommunikationseinheit mittels Versorgernetzleitungen direkt an den Netzbetreiber gesendet. Dies hat zur Folge, dass es für eine weitreichende Kompatibilität mit verschiedenen Netzbetreibern und Fahrzeughersteller umfangreicher Normungsarbeiten bedarf.

Aus der Offenlegungsschrift WO 2012/095129 A2 ist weiter ein Verfahren zum Aufladen einer Fahrzeugbatterie bekannt, wobei ausgehend von einem fahrzeugseitig ermittelten ersten Ladeprofil das aktuelle Ladeprofil mittels eines Optimierungsalgorithmus zur bedarfsgerechten Steuerung des Ladevorgangs unter Berücksichtigung der Kundenanforderung, Fahrzeuganforderung und Netzanforderung ständig angepasst wird.

Die Veröffentlichung DE 11 2012 005 488 T5 zeigt eine Ladestation für ein Elektrofahrzeug, wobei Reservierungsinformationen über die elektrische Energieaufnahme des Elektrofahrzeugs ermittelt werden und auf dieser Basis ein Ladeplan erstellt wird.

Darüber hinaus können bei den bekannten konventionellen Lösungen im Rahmen der unidirektionalen Ladeverfahren, wie beispielsweise der Unterbrechung und Fortsetzung des Ladevorgangs, weitere Probleme auftreten:

- am Ende der Parkzeit ist nicht die gewünschte Energiemenge geladen,

- das Potenzial der Regelleistung wird nicht optimal ausgeschöpft, es entsteht ein Mobilitätsproblem für den Fahrzeugführer, falls er früher als geplant mit dem Fahrzeug fahren möchte,

- das angedachte Ladeverfahren ist nur in Verbindung mit bestimmten Fahrzeugausstattungen anwendbar,

- die tatsächliche Regelleistung ist nicht kalkulierbar/planbar,

- zur Abfrage von Parkzeit und Energiemenge müssen unvorteilhafte Eingaben oder Berechnungen getätigt werden.

Es bleibt somit festzustellen, dass eine praxisgerechte Anwendung der bisherigen Verfahrenslösungen nicht gegeben ist.

Der vorliegenden Erfindung liegt somit die Aufgabe zu Grunde, ein Verfahren zum Laden eines Energiespeichers eines Elektrofahrzeugs anzugeben, welches dem Stromversorgungsnetz ein möglichst großes Regelpotential hinsichtlich der bereitgestellten Energiemenge zur Verfügung stellt und dabei ohne das Kundenziel zu gefährden in einfacher Weise zu realisieren ist.

Diese Aufgabe wird durch ein Verfahren mit den Merkmalen nach Anspruch 1 gelöst.

Der Begriff steuern wird hier in einem übergeordneten Sinn verwendet, der sowohl einen reinen (vorgekoppelten) Steuermechanismus als auch ein rückgekoppeltes System (Regelung) umfassen kann.

Das erfindungsgemäße Verfahren beruht auf der Annahme, dass das Elektrofahrzeug über ein konduktives Ladesystem gemäß der Norm DIN EN 61851-1 mit der Ladestation verbunden ist. Die Ladestation ist darüber hinaus mit einer Kommunikationsschnittstelle, zumindest aber mit einer Bedieneinheit zur Eingabe von fahrzeug- und kundenspezifischen Daten ausgerüstet.

In einem ersten Schritt werden leistungsspezifische Daten einer Ladeeinrichtung des Elektrofahrzeugs erfasst, wobei hier als relevante Baugruppen der Ladeeinrichtung insbesondere ein Ladesteuergerät sowie der Energiespeicher verstanden werden.

Neben diesen technischen Fahrzeugdaten werden in einem weiteren Schritt als kundenspezifische Daten eine voraussichtlichen Parkdauer $T\_K$ und eine gewünschten Energiemenge $E\_K$ erfasst. Diese Angaben stellen das Kundenziel dar, das es unter den gegebenen technischen Voraussetzungen mit dem Ziel der Bereitstellung eines möglichst großen Regelpotentials zu erreichen gilt.

Weiterhin wird eine Grundsicherungs-Leistung $P\_GS$ als untere Leistungsgrenze bestimmt, die abhängig von der technischen Ausstattung der Ladeeinrichtung des Elektrofahrzeugs und der Ladestation einer minimalen übertragbaren Leistung entspricht und deren Unterschreitung im Verlauf des Ladevorgangs, abgesehen von einer Unterbrechung der Energieübertragung, nicht möglich ist.

Zudem wird eine maximale Ladeleistung $P\_MAX$ als obere Leistungsgrenze bestimmt, die sich aus der maximal übertragbaren Leistung der Ladestation, des Ladekabels oder des Ladesteuergerätes des Elektrofahrzeugs ergibt.

Auf der Basis der vorgenannten Daten, nämlich der leistungsspezifischen Daten der Ladeeinrichtung des Elektrofahrzeugs, der voraussichtlichen Parkdauer und der gewünschten Energiemenge sowie der Grundsicherungs-Leistung und der maximalen Ladeleistung wird ein Ladeplan erstellt, der einen zeitlichen Verlauf der Ladeleistung $P(t)$ beschreibt (Ladeverlauf).

Dabei folgt der Ladeplan erfindungsgemäß einer Ladestrategie, die den zeitlichen Verlauf der Ladeleistung über die Parkdauer vorgibt.

Anschließend wird der Ladeplan gemäß der gewählten Ladestrategie ausgeführt.

Das erfindungsgemäße Verfahren zeichnet sich somit dadurch aus, dass ausschließlich die technischen Einrichtungen der Ladestation genutzt werden, die bereits normativ festgeschrieben sind. Dies ermöglicht in vorteilhafter Weise nahezu jedes beliebige Elektrofahrzeug in das Stromversorgungsnetz zur Bereitstellung der Regelleistung einzubinden.

Weitere technische Voraussetzung ist lediglich ein nicht vollständig gefüllter Energiespeicher des Elektrofahrzeugs. In einem einmaligen Ladevorgang wird der Energiespeicher genutzt, um negative Regelleistung bereitzustellen.

Die zur Erstellung eines Ladeplans notwendigen kundenspezifischen Angaben beschränken sich auf die Parkdauer und die gewünschte Energiemenge.

Durch die Erfassung der kundenspezifischen Angaben nimmt der Benutzer Einfluss auf den Ladevorgang. Die Ladestation setzt diese Angaben unter den vorhandenen technischen Voraussetzungen in einen Ladeplan um. Dabei besitzt die Ladestation zwar die Kontrolle über den Energiefluss, hat aber nur begrenzte Regelmöglichkeiten, sodass kein Konflikt mit der Kundenzielvereinbarung entstehen kann.

Der Ladeplan besitzt den Vorteil, dass es bei einem hohen Verkehrsaufkommen, wie dem täglichen Berufsverkehr, nicht zu ungewollten Leistungsspitzen in der Stromversorgung kommt. Zudem tritt bei der erfindungsgemäßen Bereitstellung der negativen Regelleistung der positive Effekt ein, dass die Lebensdauer des Elektrofahrzeug-Energiespeichers erhöht werden kann.

Das Stromversorgungssystem bleibt bei der Anwendung des erfindungsgemäßen Verfahrens zur Laststeuerung weiterhin stabil, denn sollte ein Elektrofahrzeug als Energiespeicher nicht mehr zur Verfügung stehen, kann mithilfe einer Leistungssteigerung an einer anderen Ladestation der Ausfall kompensiert werden.

Sind darüber hinaus die Ladepläne eines jeden Elektrofahrzeugs dem Netzbetreiber bekannt, kann der Energiefluss im Netz vorrausschauend prognostiziert werden.

Das erfindungsgemäße Verfahren und die Kommunikation mit dem Netzbetreiber bzw. Energieversorger sind in der Ladestation implementiert. Somit kann das Verfahren unabhängig von dem zu ladenden Elektrofahrzeug angewendet werden.

Im Hinblick auf die Erzielung einer maximal möglichen Regelleistung folgt der Ladeplan dabei einer Ladestrategie, die den Verlauf der Ladeleistung über die angegebene Parkdauer mit eindeutigen Leistungswerten bestimmt und sichergestellt, dass zugleich das Kundenziel erreicht wird.

Es werden drei vordefinierte, zur Auswahl stehende Ladestrategien vorgeschlagen.

Eine erste Ladestrategie entspricht einer Ladestrategie "Grundsicherung mit Rampe" und beschreibt einen Verlauf der Ladeleistung über der Parkdauer, bei dem die Ladeleistung von einem Startzeitpunkt der Parkdauer konstant bleibt und bis zu einem Rampen-Startzeitpunkt dem Wert der Grundsicherungs-Leistung entspricht. Ab dem Rampen-Startzeitpunkt schließt sich von dem Wert der Grundsicherungs-Leistung ausgehend ein linearer Anstieg der Ladeleistung bis auf eine Spitzenleistung P_X zum Endzeitpunkt der Parkdauer an.

Der lineare Anstieg ist dabei durch eine Gerade bestimmt, welche durch den Ursprung der Ladeplan-Darstellung verläuft.

Eine zweite Ladestrategie entspricht einer Ladestrategie "Aufgeschobene Grundsicherung" und beschreibt einen Verlauf, bei dem die Energieübertragung bis zu einem Grundsicherungs-Startzeitpunkt zunächst verzögert wird. Ab dem Grundsicherungs-Startzeitpunkt verläuft die Ladeleistung über verbleibende Rest-Parkdauer auf dem Niveau der Grundsicherungs-Leistung bis zum Ablauf der Parkdauer.

Eine dritte Ladestrategie entspricht einer Ladestrategie "Mittelwert" und beschreibt einen Verlauf, bei dem die gewünschte Energiemenge gleichmäßig über die Parkdauer verteilt wird, sodass sich für den zeitlichen Verlauf der Ladeleistung eine über die Parkdauer konstante mittlere Ladeleistung P_AVG ergibt.

Ergibt sich eine mittlere Ladeleistung, die kleiner ist als die Grundsicherungs-Leistung ist, so kann dieser Ladestrategie nicht gefolgt werden, da die Grundsicherungs-Leistung nicht unterschritten werden kann. In diesem Fall ist nach der zweiten Ladestrategie der "Aufgeschobene(n) Grundsicherung" zu verfahren.

Ergibt sich eine mittlere Ladeleistung, die größer ist als die maximale Ladeleistung, wird über die Parkdauer (nur) die maximale Ladeleistung zugeführt. In diesem Fall wird die gewünschte Energiemenge innerhalb der Parkdauer nicht erreicht. Eine negative Regelleistung wird nicht erreicht.

Bei der Erstellung des Ladeplans wird nach einem festgelegten Entscheidungs-Ablaufplan gezielt eine der drei vordefinierten Ladestrategien ausgewählt. Als Ergebnis der Entscheidung gelangt diejenige Ladestrategie zur Anwendung, welche bei den gegebenen technischen Randbedingungen das größtmögliche Potenzial zur Bereitstellung der Regelleistung aufzeigt und dabei die Benutzervorgaben (Kundenziel) erfüllt.

Zur Auswahl einer geeigneten Ladestrategie werden die leistungsbeschreibenden Angaben des Systems, also die Grundsicherungs-Leistung als untere Leistungsgrenze und die maximale Ladeleistung als obere Leistungsgrenze, sowie die kundenspezifischen Daten Parkdauer und die Energiemenge benötigt.

In einer ersten Bedingung wird geprüft, ob die gewünschte Energiemenge größer ist als das Produkt aus Grundsicherungs-Leistung und Parkdauer. Ist diese Bedingung nicht erfüllt, kann die gewünschte Energiemenge mit einer der Grundsicherungs-Leistung entsprechenden konstanten Ladeleistung in einer kürzeren Dauer als die Parkdauer übertragen werden. Die Energieübertragung wird somit gemäß der zweiten Ladestrategie verzögert mit dem Wert der Grundsicherungs-Leistung zu einem Grundsicherungs-Startzeitpunkt beginnen.

Ist die erste Bedingung erfüllt, wird mit Zielrichtung auf die Anwendung der ersten Ladestrategie die Gerade berechnet, die den linearen Anstieg der Ladeleistung vorgibt.

Um das Kundenziel zu erreichen, folgt aus einer Leistung-Zeit-Flächenbetrachtung, dass die durch den linearen Anstieg bewirkte zusätzliche Energie (Dreiecksfläche zwischen der Linie der Grundsicherungs-Leistung und der Geraden) zusammen mit der durch die konstante Grundsicherungs-Leistung bewirkte Energie (Rechteckfläche unter der Linie der Grundsicherungs-Leistung) die gewünschte Energiemenge ergeben muss.

Mit der Annahme, dass die Gerade durch den Ursprung des Ladeplans verläuft, kann die Steigung der Geraden bestimmt werden. Aus dem Schnittpunkt der Geraden mit der Linie der Grundsicherungs-Leistung ergeben sich der Rampen-Startzeitpunkt und die zum Endzeitpunkt der Parkdauer zu liefernde Ladeleistung als Spitzenleistung.

In einer zweiten Bedingung wird nun geprüft, ob diese Spitzenleistung größer ist als die maximale Ladeleistung.

Ist diese Bedingung nicht erfüllt, erfolgt die Leistungssteuerung ab dem Rampen-Startzeitpunkt gemäß der berechneten Geraden, es wird somit die erste Ladestrategie "Grundsicherung mit Rampe" verfolgt.

Ist diese zweite Bedingung hingegen erfüllt, kann die zweite Ladestrategie wegen der absehbaren Leistungsüberschreitung nicht verfolgt werden und es gelangt die dritte Ladestrategie "Mittelwert" zur Anwendung.

Die Möglichkeit des dauerhaften Ladens mit der Grundsicherung sorgt zum einen dafür, dass dem Elektrofahrzeug eine Mindest-Energiemenge auch bei einer verkürzten Parkdauer zur Verfügung steht - ausgenommen ist die Ladestrategie der aufgeschobenen Grundsicherung. Diese kommt in dem Fall zum Einsatz, falls eine sehr geringe Energiemenge in einer größeren Zeit gewünscht ist. Hier geht man davon aus, dass es sich aufgrund der geringen Energiemenge nur um eine Nachladung handelt. Das Fahrzeug weist hier bereits eine geladene Energiemenge auf, sodass auch hier kein Mobilitätsproblem auftritt.

Zudem wird der Benutzer aufgrund eines nicht unterbrochenen Ladevorgangs nicht durch eine Nachricht "Ladevorgang unterbrochen" verunsichert. Dies könnte sonst dazu führen, dass er Ladestationen mit Lastregelung künftig meidet.

Als leistungsspezifische Daten der Ladeeinrichtung des Elektrofahrzeugs werden die Speicherkapazität des Energiespeichers, der Ladezustand des Energiespeichers und leistungsspezifische Daten des in dem Elektrofahrzeug verbauten Ladesteuergerätes erfasst.

Die Erfassung der leistungsspezifischen Daten der Ladeeinrichtung des Elektrofahrzeugs und/oder der kundenspezifischen Daten erfolgt entweder über einen eingerichteten Kommunikationskanal oder geschieht durch manuelle Eingaben des Benutzers. Der Kommunikationskanal zwischen dem Ladesteuergerät des Elektrofahrzeugs und der Ladestation kann gemäß der Norm IEC 15118 als "Power-Line-Communication" ausgeführt sein.

Falls kein Kommunikationskanal eingerichtet ist, erfolgt das Erfassen der leistungsspezifischen Daten des in dem Elektrofahrzeug verbauten Ladesteuergerätes mittels eines Anladeverfahrens in folgenden Schritten: Starten eines Ladevorgangs mit einer Ladeleistung, die einem Minimalwert eines Stromflusses in einem Außenleiter entspricht, Messen einer ersten Ladeleistung, Ermitteln der Grundsicherungs-Leistung als untere Leistungsgrenze und der Anzahl der zum Laden genutzten Außenleiter aus der gemessenen ersten Ladeleistung, Erhöhen der Ladeleistung auf eine verfügbare größte Ladeleistung, welche durch die Ladestation vorgegeben bzw. begrenzt ist und Messen einer zweiten Ladeleistung. Falls die gemessene zweite Ladeleistung größer als die Grundsicherungs-Leistung ist, wird die gemessene zweite Ladeleistung als maximale Ladeleistung verwendet. Andernfalls ist die maximale Ladeleistung der Grundsicherungs-Leistung gleichzusetzen.

Auf diese Weise können die untere und die obere Leistungsgrenze ermittelt werden, falls keine Möglichkeit der Abfrage der leistungsspezifischen Daten der Ladeeinrichtung des Elektrofahrzeugs besteht.

Ebenso kann, falls kein Kommunikationskanal eingerichtet ist, das Erfassen der kundenspezifischen Daten derart erfolgen, dass von dem Benutzer manuell an der Ladestation eine der gewünschten Reichweitenerhöhung entsprechende gewünschte Energiemenge sowie eine gewünschte Abfahrtszeit zur Berechnung der voraussichtlichen Parkdauer eingegeben wird.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:

Fig. 1:     einen Ladeplan gemäß der ersten Ladestrategie "Grundsicherung mit Rampe",

Fig. 2:     einen Ladeplan gemäß der zweiten Ladestrategie "Aufgeschobene Grundsicherung",

Fig. 3:     einen Ladeplan gemäß der dritten Ladestrategie "Mittelwert",

Fig. 4:     einen Entscheidungs-Ablaufplan zur Erstellung eines Ladeplans und

Fig. 5:     einen theoretischen Ladeplan mit Regelgrenzen.

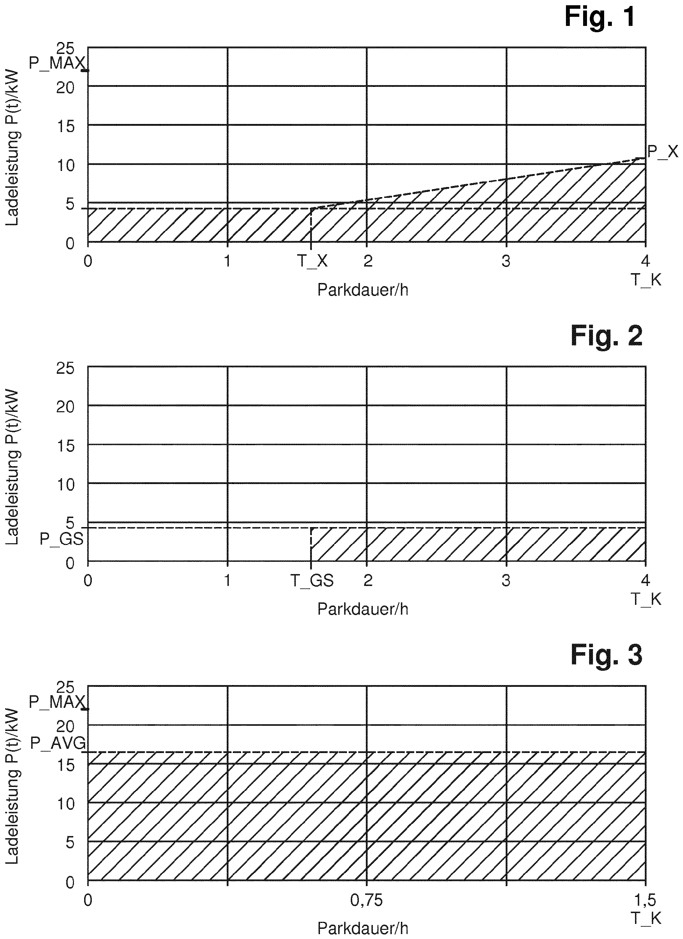

In **Fig. 1** ist die erste Ladestrategie "Grundsicherung mit Rampe" dargestellt.

Die Ladeleistung P(t) wird zu Beginn des Ladevorgangs auf dem Niveau der Grundsicherungs-Leistung P_GS gehalten, sodass eine maximal mögliche Leistungssteigerung als negative Regelleistung (Regelpotential) während der Parkdauer erreichbar ist. Um aber dem Risiko entgegenzuwirken, das Kundenziel alleine durch die Lieferung der Grundsicherungs-Leistung P_GS nicht einhalten zu können, wird die Ladeleistung P(t) ab einem Rampen-Startzeitpunkt T_X mit zunehmender Parkzeit kontinuierlich mit einem linearen Anstieg erhöht, bis die Spitzenleistung P_X am Endzeitpunkt der Parkdauer T_K erreicht wird. Die Strecke, die diesen linearen Anstieg beschreibt, soll dabei in gedachter Verlängerung durch den Ursprung des dem Ladeplan zugrunde liegenden Koordinatensystems gehen. Der Steigung der Geraden ist durch die mit dem Anstieg verbundene, erhöhte Energiemenge vorgegeben, wobei sich als Schnittpunkt mit der Linie der Grundsicherungs-Leistung P_GS der Rampen-Startzeitpunkt T_X sowie die Spitzenleistung P_X am Endzeitpunkt der Parkdauer T_K ergeben.

Beispiel:

Ein Kunde (Benutzer) parkt das Elektrofahrzeug mit einer voraussichtlichen Parkdauer T_K von vier Stunden, um die gewünschten Energiemenge E_K von 25 kWh aufzunehmen. Angenommen sei eine Ladung über eine dreiphasige Lademöglichkeit, wobei sich eine Grundsicherungs-Leistung P_GS von 4.14 kW ergibt - unter der Voraussetzung einer Netzspannung von 230 V und einer Stromstärke von 6 A pro Außenleiter (Phase).

Die Strategie "Grundsicherung mit Rampe" startet die Aufladung mit der Grundsicherungs-Leistung P_GS von 4.14 kW und behält diesen Wert als Ladeleistung P(t) bis zu dem Rampen-Startzeitpunkt T_X bei. Ab dem Rampen-Startzeitpunkt T_X wird die Ladeleistung P(t) einem linearen Anstieg folgend auf die Spitzenleistung P_X am Endzeitpunkt der Parkdauer T_K erhöht.

Mit der Grundsicherungs-Leistung P_GS alleine wird über die Parkdauer T_K hinweg ein Energiebedarf in Höhe von 16.56 kWh gedeckt. Die Fläche des durch die Gerade begrenzten Dreiecks oberhalb der Grundsicherungs-Leistung P_GS entspricht einer zusätzlichen Energiemenge von 8.44 kWh, um insgesamt die gewünschte Energiemenge E_K von 25 kWh zu erreichen.

Der Verlauf der Ladeleistung P(t) ändert sich an dem Rampen-Startzeitpunkt T_X=1,51 h und erreicht am Endzeitpunkt der Parkdauer T_K=4 h dabei eine Spitzenleistung P_X von 10.93 kW.

Bei der Berechnung der Geraden kann die Spitzenleistung P_X am Endzeitpunkt der Parkdauer T_K den Wert der maximalen Ladeleistung P_MAX übersteigen. Allerdings ist die Ladeleistung P(t) durch die technischen Eigenschaften der Ladestation und des Ladesteuergerätes auf den Wert der maximalen Ladeleistung P_MAX begrenzt. Es ist somit aus physikalischen Gründen nicht möglich, die berechnete Spitzenleistung P_X zu übertragen. Anstelle der Ladestrategie "Grundsicherung mit Rampe" wird daher die Strategie "Mittelwert" angewendet.

**Fig. 2** zeigt einen Ladeplan gemäß der zweiten Ladestrategie "Aufgeschobene Grundsicherung".

Sollte die mittlere Ladeleistung P_AVG kleiner sein als die Grundsicherungs-Leistung P_GS, ist die zu liefernde Energiemenge über einen kürzeren Zeitraum als die Parkdauer T_K zu verteilen, da die Grundsicherungs-Leistung P_GS eine untere Grenze für die Ladeleistung P(t) darstellt, die nicht unterschritten werden kann.

Der Ladungsstart wird auf einen später liegenden Grundsicherungs-Startzeitpunkt T_GS verschoben, ab dem über eine restliche Parkdauer die gewünschte Energiemenge E_K allein durch die Grundsicherungs-Leisung P_GS erreicht wird.

Der Grundsicherungs-Startzeitpunkt T_GS ergibt sich aus

$$T\_GS = T\_K - (E\_K/P\_GS).$$

Beispiel:

Der Kunde parkt das Elektrofahrzeug mit einer voraussichtlichen Parkdauer T_K von vier Stunden, um die gewünschten Energiemenge E_K von 10 kWh aufzunehmen.

Die mittlere Ladeleistung P_AVG beträgt somit 2.5 kW und liegt unter dem Wert der dreiphasigen Grundsicherungs-Leistung P_GS von 4.14 kW.

Der Startzeitpunkt der Ladung wird daher auf den Grundsicherungs-Startzeitpunkt T_GS=1.58 h verzögert, ab dem die Ladung über eine Restparkdauer T_K-T_GS=2.42 h mit der Grundsicherungs-Leistung P_GS=4.14 kW startet, um die gewünschte Energiemenge E_K=10 kWh zu liefern.

In **Fig. 3** ist ein Ladeplan gemäß der dritten Ladestrategie "Mittelwert" gezeigt.

Zur Bestimmung der mittleren Ladeleistung P_AVG wird die gewünschte Energiemenge E_K gemäß P_AVG=E_K/T_K gleichmäßig über die Parkdauer T_K verteilt.

Mit dieser mittleren Ladeleistung P_AVG wird über die Parkdauer T_K geladen.

Zwei Ausnahmen sind hier zu beachten. Ist die mittlere Ladeleistung P_AVG kleiner als die Grundsicherungs-Leistung P_GS, muss nach der zweiten Ladestrategie der "Aufgeschobene(n) Grundsicherung" verfahren werden, da die Grundsicherungs-Leistung P_GS nicht unterschritten werden kann.

Ist die mittlere Ladeleistung P_AVG größer als die maximale Ladeleistung P_MAX, kann die gewünschte Energiemenge nicht erreicht, bzw. das Kundenziel nicht erfüllt werden. Somit kann auch keine negative Regelleistung zur Verfügung gestellt werden.

Es wird die maximal mögliche Energiemenge bereitgestellt, indem die maximale Ladeleistung P_MAX während der Parkdauer T_K übertragen wird.

Beispiel:

Der Kunde parkt das Elektrofahrzeug mit einer voraussichtlichen Parkdauer T_K von eineinhalb Stunden, um die gewünschten Energiemenge E_K von 25 kWh aufzunehmen.

Die Ladeeinrichtung des Elektrofahrzeugs verfügt über ein dreiphasiges Ladesteuergerät mit einer Leistung von 22 kW. Als maximale Ladeleistung P_MAX (obere Leistungsgrenze) ist die Leistung des Ladesteuergerätes anzusetzen.

Die mittlere Ladeleistung P_AVG beträgt 16,67 kW. Sie liegt damit zwischen der Grundsicherungs-Leistung P_GS von 4.14 kW und der maximalen Ladeleistung P_MAX von 22 kW.

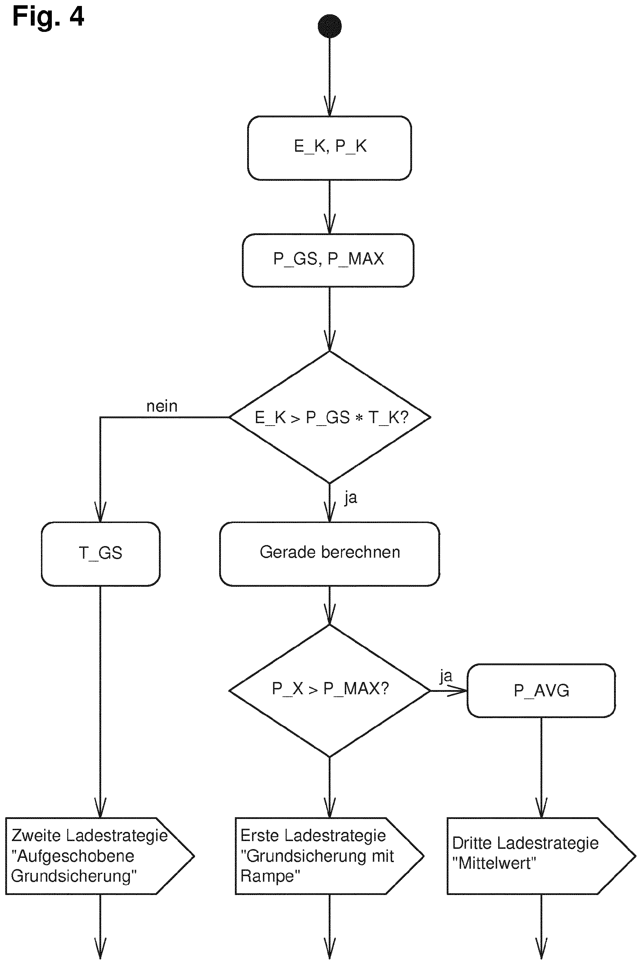

**Fig. 4** zeigt einen Entscheidungs-Ablaufplan zur Erstellung eines Ladeplans.

Ausgehend davon, dass die Benutzerangaben über die gewünschte Energiemenge E_K und die voraussichtliche Parkdauer T_K vorliegen, wird zunächst die Grundsicherungs-Leistung P_GS als untere Leistungsgrenze und die maximale Ladeleistung P_MAX als obere Leistungsgrenze ermittelt.

Zur Bestimmung der unteren Leistungsgrenze wird dem Elektrofahrzeug zu Beginn des Ladeprozesses die kleinste mögliche Ladeleistung zur Verfügung gestellt. Anhand der Leistungsaufnahme kann die Anzahl der von dem Fahrzeug genutzten Außenleiter und daraus wiederum der Wert der Grundsicherungs-Leistung P_GS bestimmt werden.

Ohne den Ladevorgang zu unterbrechen wird dem Fahrzeug anschließend zur Bestimmung der oberen Leistungsgrenze die größte mögliche Ladeleistung zur Verfügung gestellt. Anhand der Leistungsaufnahme wird die maximale Ladeleistung P_MAX bestimmt.

Liegen die den Ladeverlauf bestimmenden Randbedingungen fest, wird in einem zweistufigen Entscheidungsprozess eine der drei Ladestrategien ausgewählt.

In einer ersten Bedingung wird untersucht, ob die erste Ladestrategie "Grundsicherung mit Rampe" zur Anwendung gelangen kann. Dazu muss geprüft werden, ob die gewünschte Energiemenge E_K größer ist, als das Produkt aus der voraussichtlichen Parkdauer T_K multipliziert mit der Grundsicherungs-Leistung P_GS.

Ist dies nicht der Fall, muss die zweite Ladestrategie der aufgeschobenen Grundsicherung für die Erstellung des Ladeplans angewendet werden, um die Grundsicherungs-Leistung P_GS nicht zu unterschreiten.

Falls die gewünschte Energiemenge E_K jedoch größer ist, als das Produkt aus voraussichtlicher Parkdauer T_K und Grundsicherungs-Leistung P_GS ist zu entscheiden, ob die erste Ladestrategie "Grundsicherung mit Rampe" oder die dritte Ladestrategie "Mittelwert" anzuwenden ist.

Daher ist nach Berechnung der Geradengleichung in einer zweiten Bedingung zu prüfen, ob die sich aus der Geradengleichung ergebende Spitzenleistung P_X die maximale Ladeleistung P_MAX überschreitet.

Ist diese zweite Bedingung erfüllt, so wird die dritte Ladestrategie "Mittelwert" angewendet. Die mittlere Ladeleistung P_AVG wird dann aus der gewünschten Energiemenge E_K und der Parkdauer T_K berechnet.

Ist diese zweite Bedingung nicht erfüllt, liegt also die Spitzenleistung P_X am Endzeitpunkt der Parkdauer unterhalb der maximalen Ladeleistung P_MAX kann die erste Strategie "Grundsicherung mit Rampe" angewendet werden.

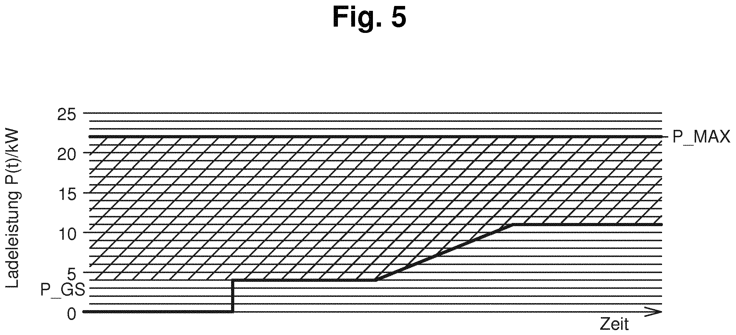

**Fig. 5** zeigt einen theoretischen Ladeplan mit Regelgrenzen.

Aus dem Ladeplan und der maximalen Ladeleistung P_MAX geht der Regelbereich hervor. Der Regelbereich zeigt die negative Regelleistung über der Zeit auf. Die untere Regelgrenze wird durch die die Grundsicherungs-Leistung P_GS oder der durch den Ladeplan festgelegten Ladeleistung P(t) bestimmt.

Die untere Regelgrenze kann den Wert Null annehmen, beispielsweise bei einer Verzögerung des Ladevorgangs, eine Leistungserhöhung von dem Wert Null aus ist allerdings nur genau auf oder über die Grundsicherungs-Leistung P_GS möglich.

Die obere Regelgrenze der Ladeleistung liegt bei dem technischen Maximum, beschrieben durch die maximale Ladeleistung P_MAX, welche durch die Ladeanschlussleitung, Leitungsschutzschalter oder das Ladesteuergerät begrenzt wird.

Das Diagramm zeigt schraffiert den Regelbereich in einem beliebigen Ladeplan bei einer Grundsicherungs-Leistung von 4,14 kW und der maximalen Ladeleistung P_MAX von 22 kW.

Durch den Ladeplan werden Kundenvorgaben eingehalten, wobei Regelleistung zwischen geplanter Ladeleistung und maximaler Ladeleistung bereitgestellt wird.

Ist eine Ladestation mit dem erfindungsgemäßen Verfahren ausgerüstet, somit der Ladeplan bekannt, können mittels einer beliebigen geeigneten Kommunikationsschnittstelle Informationen über die verfügbare negative Regelleistung direkt an den Energieversorger oder einen Dritten übermittelt werden. Die Daten von mehreren dezentralen Ladestationen können zentral in einem virtuellen Kraftwerk gesammelt werden. Dies lässt sich entsprechend so skalieren, dass realistischer Weise Regelleistungen bis in den Megawattbereich in dem Stromversorgungsnetz bereitgestellt werden können.

Beherrscht eine Ladestation das Verfahren und verfügt über entsprechende Kommunikationsschnittstellen, kann sich jeder einzelne Ladesäulenbetreiber mit dem Betreiber des virtuellen Kraftwerks in Verbindung setzen. Die Ladestation wird sich mit dem Server des Kraftwerks verbinden und fragt zu Beginn eines jeden Ladevorgangs am Server an, um eine Session zur Leistungsregelung zu initiieren. Die Session wird für die Dauer des Ladevorgangs aufrechterhalten.

Ist eine Session geöffnet, erfasst die Ladestation die Fahrzeugdaten und erstellt den Ladeplan wie beschrieben. Der Ladeplan wird dem virtuellen Kraftwerk übermittelt. Das Leistungsaufkommen ist damit über die gesamte Zeit des Ladevorgangs definiert.

Das Fahrzeug wird anhand des im Ladeplan definierten Leistungsverlaufs geladen. So ist nach Ende der Parkdauer die gewünschte Energiemenge im Fahrzeug sichergestellt. Das virtuelle Kraftwerk hat innerhalb der Parkdauer die Möglichkeit, die Ladeleistung gezielt bis P_MAX zu erhöhen und nutzt damit nun die negative Regelleistung.

Eine Session mit dem virtuellen Kraftwerk wird beendet, wenn das Fahrzeug die der gewünschten Reichweitenerhöhung entsprechende Energiemenge geladen hat. Eine Session kann ebenfalls beendet werden, falls der Ladevorgang unterbrochen wurde. Der Ladevorgang kann beispielsweise manuell durch den Fahrzeughalter unterbrochen werden, falls er die Ladestation vor Ablauf der voraussichtlichen Parkzeit verlassen möchte.

**Patentansprüche**

1. Verfahren zur Laststeuerung einer Ladestation für ein Elektrofahrzeug mit einem Energiespeicher, wobei eine Ladeleistung (P(t)) konduktiv über eine Ladeanschlussleitung zugeführt und gesteuert wird, umfassend die Verfahrensschritte:

   - Erfassen von leistungsspezifischen Daten einer Ladeeinrichtung des Elektrofahrzeugs,
   - Erfassen einer voraussichtlichen Parkdauer (T_K) und einer gewünschten Energiemenge (E_K) als kundenspezifische Daten,
   - Bestimmen einer mittleren Ladeleistung (P_AVG) gemäß P_AVG=E_K/T_K,
   - Bestimmen einer Grundsicherungs-Leistung (P_GS) und einer maximalen Ladeleistung (P_MAX),
   - Erstellen eines Ladeplans, der einen zeitlichen Verlauf der Ladeleistung (P(t)) beschreibt, in funktionaler Abhängigkeit von den leistungsspezifischen Daten der Ladeeinrichtung des Elektrofahrzeugs, von der voraussichtlichen Parkdauer (T_K) und der gewünschten Energiemenge (E_K) sowie von der Grundsicherungs-Leistung (P_GS) und der maximalen Ladeleistung (P_MAX),
   - wobei der Ladeplan einer Ladestrategie folgt, die den zeitlichen Verlauf der geplanten Ladeleistung (P(t)) vorgibt,

- Ausführen des Ladeplans gemäß der gewählten Ladestrategie,

wobei als Ladestrategie eine erste Ladestrategie gewählt wird, bei der die Ladeleistung (P(t)) von einem Startzeitpunkt (t=0) der Parkdauer bis zu einem Rampen-Startzeitpunkt (T_X) der Grundsicherungs-Leistung (P_GS) entspricht und ab dem Rampen-Startzeitpunkt (T_X) ausgehend von der Grundsicherungs-Leistung (P_GS) auf einer Geraden bis zu einer Spitzenleistung (P_X) am Endzeitpunkt der Parkdauer (T_K) ansteigt, wobei die steigende Gerade durch den Ursprung des Ladeplans verläuft, oder als Ladestrategie eine zweite Ladestrategie gewählt wird, bei der die Ladeleistung (P(t)) zu einem Startzeitpunkt (t=0) der Parkdauer bis zu einem Grundsicherungs-Startzeitpunkt (t=T_GS) Null beträgt und ab dem Grundsicherungs-Startzeitpunkt (T_GS) bis zum Ablauf der Parkdauer (T_K) konstant verläuft und der Grundsicherungs-Leistung (P_GS) entspricht oder als Ladestrategie eine dritte Ladestrategie gewählt wird, bei der die gewünschte Energiemenge (E_K) gleichmäßig über die Parkdauer (T_K) verteilt wird, sodass sich für den zeitlichen Verlauf der Ladeleistung (P(t)) die über die Parkdauer (T_K) konstante mittlere Ladeleistung (P_AVG) ergibt.

2. Verfahren nach Anspruch 1, **dadurch gekennzeichnet,** **dass**, falls die mittlere Ladeleistung (P_AVG) kleiner ist als die Grundsicherungs-Leistung (P_GS), ist nach der zweiten Ladestrategie zu verfahren.

3. Verfahren nach Anspruch 1, **dadurch gekennzeichnet,** **dass**, falls die mittlere Ladeleistung (P_AVG) größer ist als die maximale Ladeleistung (P_MAX), wird über die Parkdauer (T_K) die maximale Ladeleistung (P_MAX) zugeführt, wobei die gewünschte Energiemenge (E_K) nicht erreicht wird.

4. Verfahren nach Anspruch 1, **dadurch gekennzeichnet,** **dass** die Auswahl der Ladestrategie zur Erstellung des Ladeplans in folgenden Schritten erfolgt:

- Prüfen in einer ersten Bedingung, ob die gewünschte Energiemenge (E_K) größer als das Produkt aus Grundsicherungs-Leistung (P_GS) und Parkdauer (T_K) ist, - falls die erste Bedingung nicht erfüllt ist, wird der Grundsicherungs-Startzeitpunkt (T_GS) bestimmt und nach der zweiten Ladestrategie verfahren, - falls die erste Bedingung erfüllt ist, wird zur Prüfung der Anwendung der ersten Ladestrategie die steigende Gerade, welche den Anstieg der Ladeleistung (P(t) für t>T_X) beschreibt, so berechnet, dass die gewünschte Energiemenge (E_K) innerhalb der Parkdauer (T_K) zuführbar ist, wobei sich der Rampen-Startzeitpunkt (T_X) aus dem Schnittpunkt der horizontalen Geraden der konstanten Grundsicherungs-Leistung (P_GS) mit der berechneten steigenden Gerade ergibt, - Prüfen in einer zweiten Bedingung, ob sich die aus der berechneten Geraden ergebende Spitzenleistung (P_X) am Endzeitpunkt der Parkdauer (T_K) größer ist als die maximale Ladeleistung (P_MAX), - falls die zweite Bedingung nicht erfüllt ist, erfolgt die Anwendung der ersten Ladestrategie, - falls die zweite Bedingung erfüllt ist, wird die mittlere Ladeleistung (P_AVG) bestimmt und nach der dritten Ladestrategie verfahren.

5. Verfahren nach einem der Ansprüche 1 bis 4, **dadurch gekennzeichnet,** **dass** als leistungsspezifische Daten der Ladeeinrichtung des Elektrofahrzeugs die Speicherkapazität des Energiespeichers, der Ladezustand des Energiespeichers und leistungsspezifische Daten eines in dem Elektrofahrzeug verbauten Ladesteuergerätes erfasst werden.

6. Verfahren nach einem der Ansprüche 1 bis 5, **dadurch gekennzeichnet,** **dass** die leistungsspezifischen Daten der Ladeeinrichtung des Elektrofahrzeugs und/oder die kundenspezifischen Daten über einen eingerichteten Kommunikationskanal an die Ladestation übertragen werden.

7. Verfahren nach einem der Ansprüche 1 bis 5, **dadurch gekennzeichnet,** **dass**, falls kein Kommunikationskanal eingerichtet ist, das Erfassen der leistungsspezifischen Daten des in dem Elektrofahrzeug verbauten Ladesteuergerätes erfolgt durch:

- Starten eines Ladevorgangs mit einer Ladeleistung, die einem kleinsten einzustellenden Wert eines Stromflusses in einem Außenleiter entspricht, - Messen einer ersten Ladeleistung, - Ermitteln der Grundsicherungs-Leistung (P_GS) als untere Leistungsgrenze und der Anzahl der zum Laden genutzten Außenleiter aus der gemessenen ersten Ladeleistung, - Erhöhen der Ladeleistung auf eine verfügbare größte Ladeleistung, welche durch die Ladestation vorgegeben ist, - Messen einer zweiten Ladeleistung, - falls die gemessene zweite Ladeleistung näherungsweise gleich der gemessenen ersten Ladeleistung ist, ist die Grundsicherungs-Leistung (P_GS) als maximale Ladeleistung (P_MAX) zu setzen,

- falls die gemessene zweite Ladeleistung größer als die gemessene erste Ladeleistung ist, ist die gemessene zweite Ladeleistung als maximale Ladeleistung (P_MAX) zu setzen.

**8.** Verfahren nach einem der Ansprüche 1 bis 5 oder 7, **dadurch gekennzeichnet,**
**dass**, falls kein Kommunikationskanal eingerichtet ist, das Erfassen der kundenspezifischen Daten derart erfolgt, dass von dem Fahrzeugführer manuell an der Ladestation eine der gewünschten Reichweitenerhöhung entsprechende gewünschte Energiemenge (E_K) sowie eine gewünschte Abfahrtszeit zur Berechnung der voraussichtlichen Parkdauer (T_K) eingegeben wird.

**Claims**

**1.** A method for managing the energy demand of a charging station for an electric vehicle having an energy storage device, a charging power (P(t)) being supplied and controlled conductively via a charging connection line, comprising the following method steps:

- recording power-specific data of a charging device of the electric vehicle,
- recording an anticipated parking duration (T_K) and a desired energy amount (E_K) as customer-specific data,
- determining an average charging power (P_AVG) according to P_AVG = E_K/T_K
- determining a base supply power (P_GS) and a maximal charging power (P_MAX),
- establishing a charging plan describing a temporal progression of the charging power (P(t)) as a function of the power-specific data of the charging device of the electric vehicle, of the anticipated parking duration (T_K) and the desired energy amount (E_K) and of the base supply power (P_GS) and the maximal charging power (P_MAX),
- said charging plan following a charging strategy dictating the temporal progression of the planned charging power (P(t)),
- implementing the charging plan according to the selected charging strategy, a first charging strategy being selected as a charging strategy in which the charging power (P(t)) from a start time (t=0) of the parking duration to a ramp start time (T_X) corresponds to the base supply power (P_GS) and rises on a straight line to a peak power (P_X) at the end time of the parking duration (T_K) starting from the base supply power (P_GS) at the ramp start time (T_X), said rising straight line extending through the origin of the charging plan, or a second charging strategy being selected as a charging strategy in which the charging power (P(t)) at a start time (t=0) of the parking duration to a base supply start time (t=T_GS) is zero and progresses constantly starting from the base supply start time (T_GS) to the termination of the parking duration (T_K) and corresponds to the base supply power (P_GS), or a third charging strategy is selected as a charging strategy in which the desired energy amount (E_K) is distributed equally over the parking duration (T_K) so as to yield the average charging power (P_AVG), which is constant for the parking duration (T_K), for the temporal progression of the charging power (P(t)).

**2.** The method according to claim 1,
**characterized in that**
if the average charging power (P_AVG) is smaller than the base supply power (P_GS), the second charging strategy is to be implemented.

**3.** The method according to claim 1,
**characterized in that**
if the average charging power (P_AVG) is larger than the maximal charging power (P_MAX), the maximal charging power (P_MAX) is supplied for the parking duration (T_K), while the desired energy amount (E_K) is not achieved.

**4.** The method according to claim 1,
**characterized in that**
the charging strategy for establishing the charging plan is selected in the following steps:

- examining in a first condition whether the desired energy amount (E_K) is larger than the product of the base supply power (P_GS) and parking duration (T_K),
- if the first condition is not fulfilled, the base supply start time (T_GS) is determined and the second charging strategy is implemented,
- if the first condition is fulfilled, the rising straight line, which describes the increase of the charging power (P(t) for t>T_X), is calculated such for examining the applicability of the first charging strategy that the desired energy amount (E_K) can be supplied during the parking duration (T_K), the ramp start time (T_X) being yielded from the intersection of the horizontal line of the constant base supply power (P_GS) with the calculated rising straight line,
- examining in a second condition whether the peak power (P_X) yielded from the calculated straight line is larger than the maximal charging power (P_MAX) at the end time of the parking duration (T_K),

- if the second condition is not fulfilled, the first charging strategy is applied,
- if the second condition is fulfilled, the average charging power (P_AVG) is determined and the third charging strategy is implemented.

5. The method according to one of the claims 1 to 4, **characterized in that**
the storage capacity of the energy storage device, the charging state of the energy storage device and power-specific data of a charging control device installed in the electric vehicle are recorded as power-specific data of the charging device of the electric vehicle.

6. The method according to one of the claims 1 to 5, **characterized in that**
the power-specific data of the charging device of the electric vehicle and/or the customer-specific data are transmitted to the charging station via an installed communication channel.

7. The method according to one of the claims 1 to 5, **characterized in that**
if no communication channel is installed, the power-specific data of the charging control device installed in the electric vehicle is recorded by

- starting a charging process with a charging power corresponding to a smallest value of a current flow to be set in an outer conductor,
- measuring a first charging power,
- detecting the base supply power (P_GS) as the lowest power threshold and the number of the outer conductors, which are intended to be used for charging, from the first measured charging power,
- increasing the charging power to an available largest charging power predetermined by the charging station,
- measuring a second charging power,
- if the second measured charging power is nearly equal to the first measured charging power, the base supply power (P_GS) is to be set as the maximal charging power (P_MAX),
- if the second measured charging power is larger than the first measured charging power, the second measured charging power is to be set as the maximal charging power (P_MAX).

8. The method according to one of the claims 1 to 5 or 7, **characterized in that**
if no communication channel is installed, the customer-specific data is recorded such that a desired energy amount (E_K) corresponding to the desired range extension and a desired departure time is input manually by the vehicle operator at the charging station for calculating the anticipated parking duration (T_K).

**Revendications**

1. Procédé pour la gestion de la demande énergétique d'une station de recharge pour un véhicule électrique ayant un dispositif de stockage d'énergie, un courant de recharge (P(t)) étant alimenté et étant contrôlé conductivement par une ligne de recharge, le procédé comprenant des étapes de procédé suivantes :

- saisir des données spécifiques au courant d'un dispositif de recharge du véhicule électrique,
- saisir une durée de stationnement (T_K) probable et une quantité d'énergie (E_K) désirée comme données spécifiques au client,
- déterminer un courant de recharge moyen (P_AVG) défini par P_AVG = E_K/T_K
- déterminer un courant d'approvisionnement (P_GS) et un courant de recharge maximal (P_MAX),
- établir un projet de recharge, qui décrit une progression temporelle du courant de recharge (P(t)), en tant que fonction des données spécifiques au courant du dispositif de recharge du véhicule électrique, de la durée de stationnement (T_K) probable et de la quantité d'énergie (E_K) désirée et du courant d'approvisionnement (P_GS) et du courant de recharge maximal (P_MAX),
- le projet de recharge suivant une stratégie de recharge indiquant la progression temporelle du courant de recharge (P(t)) projeté,
- exécutant le projet de recharge selon la stratégie de recharge choisie, une première stratégie de recharge étant choisie comme stratégie de recharge dans laquelle le courant de recharge (P(t)) à partir d'un début (t=0) de la durée de stationnement jusqu'à un début de rampe (T_X) corresponde au courant d'approvisionnement (P_GS) et monte sur une ligne droite jusqu'à une puissance maximale (P_X) au fin de la durée de stationnement (T_K) à partir du courant d'approvisionnement (P_GS) au début de rampe (T_X), la ligne droite montant à travers l'origine du projet de recharge,

ou une deuxième stratégie de recharge étant choisie comme stratégie de recharge dans laquelle le courant de recharge (P(t)) à un début (t=0) de la durée de stationnement jusqu'à un début de performance d'approvisionnement (t=T_GS) est nulle et avance constamment à partir du début de performance d'approvisionnement (T_GS) jusqu'à la terminaison de la durée de stationnement (T_K) et corresponde au courant d'approvisionnement (P_GS),

ou une troisième stratégie de recharge étant choisie comme stratégie de recharge dans laquelle la quantité d'énergie (E_K) désirée est distribuée également sur la durée de stationnement (T_K) afin d'obtenir le courant de recharge moyen (P_AVG), qui est constant pendant la durée de stationnement (T_K), pour la progression temporelle du courant de recharge (P(t)).

2. Procédé selon la revendication 1,
**caractérisé en ce que**
si le courant de recharge moyen (P_AVG) est plus petit que le courant d'approvisionnement (P_GS), la deuxième stratégie de recharge doit être exécutée.

3. Procédé selon la revendication 1,
**caractérisé en ce que**
si le courant de recharge moyen (P_AVG) est plus grand que le courant de recharge maximal (P_MAX), le courant de recharge maximal (P_MAX) est alimenté pendant la durée de stationnement (T_K), la quantité d'énergie (E_K) désirée n'étant pas attenue.

4. Procédé selon la revendication 1,
**caractérisé en ce que**
la stratégie de recharge pour l'établissement du projet de recharge est choisie dans des étapes suivantes :

- examiner dans une première condition si la quantité d'énergie (E_K) désirée est plus grande que le produit résultant du courant d'approvisionnement (P_GS) et de la durée de stationnement (T_K),
- si la première condition n'est pas satisfaite, le début de performance d'approvisionnement (T_GS) est déterminé et la deuxième stratégie de recharge est exécutée,
- si la première condition est satisfaite, la ligne droite montant qui décrit l'augmentation du courant de recharge (P(t) pour t>T_X) est calculée pour l'examen de l'applicabilité de la première stratégie de recharge de telle manière que la quantité d'énergie (E_K) désirée peut être alimentée pendant la durée de stationnement (T_K), le début de rampe (T_X) étant obtenu de l'intersection de la ligne droite horizontale du courant d'approvisionnement (P_GS) constant avec la ligne droite montant calculée,
- examiner dans une deuxième condition si la puissance maximale (P_X) obtenue de la ligne droite calculée est plus grande que le courant de recharge maximal (P_MAX) à la fin de la durée de stationnement (T_K),
- si la deuxième condition n'est pas satisfaite, la première stratégie de recharge est appliquée,
- si la deuxième condition est satisfaite, le courant de recharge moyen (P_AVG) est déterminé et la troisième stratégie de recharge est exécutée.

5. Procédé selon l'une quelconque des revendications 1 à 4,
**caractérisé en ce que**
la capacité de stockage du dispositif de stockage d'énergie, l'état de recharge du dispositif de stockage d'énergie et des données spécifiques au courant d'un dispositif de contrôle de recharge installé dans le véhicule électrique sont enregistrés comme données spécifiques au courant du dispositif de recharge du véhicule électrique.

6. Procédé selon l'une quelconque des revendications 1 à 5,
**caractérisé en ce que**
les données spécifique au courant du dispositif de recharge du véhicule électrique et/ou les données spécifiques au client sont transmises à la station de recharge par un canal de communication.

7. Procédé selon l'une quelconque des revendications 1 à 5,
**caractérisé en ce que**
si il y a pas de canaux de communication installés, les données spécifiques au courant du dispositif de contrôle de recharge installé dans le véhicule électrique sont enregistrées par

- commencer un processus de recharge avec un courant de recharge correspondant à un plus petite valeur d'un écoulement de courant dans un conducteur extérieur à être ajustée,
- mesurer un premier courant de recharge,
- détecter le courant d'approvisionnement (P_GS) comme plus petit seuil de courant et la nombre de conducteurs extérieurs, qui sont prévus pour l'utilisation de rechargement, du premier courant de recharge mesuré,
- augmenter le courant de recharge à un courant de recharge le plus grand disponible prédéterminé par la station de recharge,
- mesurer un deuxième courant de recharge,
- si le deuxième courant de recharge mesuré est presque égal au premier courant de recharge mesuré, le courant d'approvisionnement (P_GS) doit être employé comme courant de recharge maximal (P_MAX),
- si le deuxième courant de recharge maximal est plus grand que le premier courant de recharge mesuré, le deuxième courant de recharge mesuré doit être employé comme courant de recharge maximal (P_MAX).

8. Procédé selon l'une quelconque des revendications 1 à 5 ou 7,
**caractérisé en ce que**

si il y a pas de canaux de communication installés, les données spécifiques au client sont enregistrées de telle manière que l'opérateur de véhicule entre manuellement à la station de recharge une quantité d'énergie (E_K) désirée correspondant à une augmentation d'autonomie désirée et un temps de départ désiré pour computer la durée de stationnement (T_K) probable.

**Fig. 1**

**Fig. 2**

**Fig. 3**

# Fig. 4

```
                              ●
                              │
                              ▼
                        ┌───────────┐
                        │ E_K, P_K  │
                        └───────────┘
                              │
                              ▼
                        ┌───────────┐
                        │ P_GS, P_MAX│
                        └───────────┘
                              │
                              ▼
                            ◇◇◇◇◇
    nein                ◇             ◇
  ◄─────────────────── ◇ E_K > P_GS * T_K? ◇
  │                     ◇             ◇
  │                        ◇◇◇◇◇
  │                          │ ja
  ▼                          ▼
┌─────────┐          ┌─────────────────┐
│  T_GS   │          │ Gerade berechnen │
└─────────┘          └─────────────────┘
  │                          │
  │                          ▼
  │                        ◇◇◇◇◇              ┌─────────┐
  │                    ◇             ◇   ja   │         │
  │                   ◇  P_X > P_MAX?  ◇─────►│  P_AVG  │
  │                    ◇             ◇        │         │
  │                        ◇◇◇◇◇              └─────────┘
  │                          │                     │
  ▼                          ▼                     ▼
```

Zweite Ladestrategie "Aufgeschobene Grundsicherung"

Erste Ladestrategie "Grundsicherung mit Rampe"

Dritte Ladestrategie "Mittelwert"

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009043380 A1
- WO 2012095129 A2
- DE 112012005488 T5